# EUROPEAN PATENT APPLICATION

(11) **EP 2 134 112 A1**
(43) Date of publication of application: **16.12.2009**
(21) Application number: 09005536.9
(22) Date of filing: 20.04.2009
(51) Int. Cl.: H04W 8/26, H04W 12/08, H04W 84/12, H04W 8/24

(54) **Wireless device and method for automatically establishing wireless connection**

(30) Priority: 11.06.2008 TW 97121665
(71) Applicant: ASUSTek Computer Inc., Peitou Taipei, Taiwan (CN)
(72) Inventor: Yeh, Chien-Chih, Peitou Taipei, Taiwan (CN); Wang, Chun-Jui, Peitou Taipei, Taiwan (CN)
(74) Representative: Jordan, Volker Otto Wilhelm

(57) **Abstract**

The invention discloses a wireless device and a method for automatically establishing a wireless connection. The wireless device is selectively connected to the information providing device. The information providing device stores setting information relative to a wireless network. The wireless device comprises a wireless interface and a first wired interface. The information providing device comprises a second wired interface. When the first wired interface of the wireless device is coupled to the second wired interface of the information providing device, alternatively, the information providing device automatically provides the setting information to the wireless device, or the wireless device actively gathers the setting information from the information providing device. After fetching the setting information, the wireless device utilizes the setting information to connect the wireless network via the wireless interface.

## Description

### BACKGROUND OF THE INVENTION

### 1. Field of the invention

The invention relates to a wireless device and, more particularly, to a wireless device and a method for automatically establishing wireless connection of a wireless network.

### 2. Description of the prior art

Wireless network, by definition, is a network which utilizes electromagnetic waves, such as radio waves, in data interchanging. There is no obvious difference in usage and application between wireless network and wired network. The only major difference between them is the carrier used in data interchanging. Wireless network utilizes radio waves as the carrier, while the wired network utilizes concrete wiring. Because of adopting the radio waves, wireless network enjoys more mobility and convenience in assembling the hardware, compared to wired network. However, wireless network is relatively inconvenient in installing related drivers and configuring a wireless connection.

Following is an example. In a wireless network system, when a new wireless device joins a present wireless network, the new wireless device needs some configuration of the wireless communication information of the present wireless network. In other words, setting information of the wireless device needs to be configured before establishing the wireless connection to the wireless network. In general, the setting information of a wireless network includes Service Set Identifier (SSID), network authentication, data encryption, etc. Besides, an ordinary network further needs IP address, netmask, Domain Name System (DNS), gateway (GW) information, etc.

Said setting information is not obvious to common users. In order to connect the wireless device to the wireless network, users must know exactly all the setting information relative to the wireless network. If users are not able to acquire the relative setting information, the wireless device will fail to connect the wireless network. However, new users often can not acquire the setting information relative to the present wireless network; therefore, they can not easily connect the wireless device to the wireless network.

In addition, said setting information must be entered manually by users to complete the configuration. Especially when a wireless device is connected to an unfamiliar wireless network, the users must manually reconfigure the setting information of the wireless network. All these requirements are not user-friendly for average users.

### SUMMARY OF THE INVENTION

A scope of the invention is to provide a wireless device. The wireless device has not only a wireless interface, but also a wired interface, e.g., Universal Serial Bus (USB) interface or Ethernet interface. The only thing that users need to do is coupling the wired interface of the wireless device to the corresponding wired interface of the information providing device, and then the wireless device can actively or passively fetch the setting information relative to the wireless network, so as to complete the wireless connecting configuration.

According to an embodiment, a wireless device of the invention comprises a wireless interface and a first wired interface, which the first wired interface can selectively coupled to a second wired interface of an information providing device. The information providing device stores setting information relative to a wireless network.

In the embodiment, when the first wired interface of the wireless device is coupled to the second wired interface of the information providing device, the information providing device automatically provides the setting information through the first wired interface and the second wired interface to the wireless device, or alternatively, the wireless device actively gathers the setting information from the information providing device through the first wired interface and the second wired interface. After fetching the setting information, the wireless device adopts the setting information, and connects to the wireless network through the wireless interface.

Another scope of the invention is to provide a method of automatically establishing a wireless connection. The method is suitable for said wireless device and information providing device. The method includes the following steps of: (a) coupling a first wired interface of the wireless device to a second wired interface of the information providing device; (b) fetching the setting information through the first wired interface and the second wired interface; and (c) utilizing the setting information to connect the wireless device and the wireless network.

The benefit of the invention is that users no longer need to memorize complex and annoying passwords or relative configurations for safety reasons, but they can establish a safe wireless connection between a wireless appliance and a wireless router through some easy steps. The network configuration is performed at the same time to ensure a valid access to the network. Besides, the invention can be used to provide services other than network connection, e.g., storing space setup, audio equipment setup, printer setup, etc.

The advantage and spirit of the invention may be understood by the following recitations together with the appended drawings.

### BRIEF DESCRIPTION OF THE APPENDED DRAWINGS

FIG. 1A is a schematic diagram illustrating a wireless communication system 1 according to an embodiment of the invention.
FIG. 1B is a functional block diagram illustrating the wireless communication system 1 in FIG. 1A.
FIG. 2 is a flowchart illustrating a method to automatically establish a wireless connection according to an embodiment of the invention.
FIG. 3 is a flowchart illustrating a method to automatically establish a wireless connection according to another embodiment of the invention.
FIG. 4A is a schematic diagram illustrating a wireless communication system 3 according to another embodiment of the invention.
FIG. 4B is a functional block diagram illustrating the wireless communication system 3 in FIG. 4A.
FIG.5 is a flowchart illustrating a method to automatically establish a wireless connection according to another embodiment of the invention.

### DETAILED DESCRIPTION OF THE INVENTION

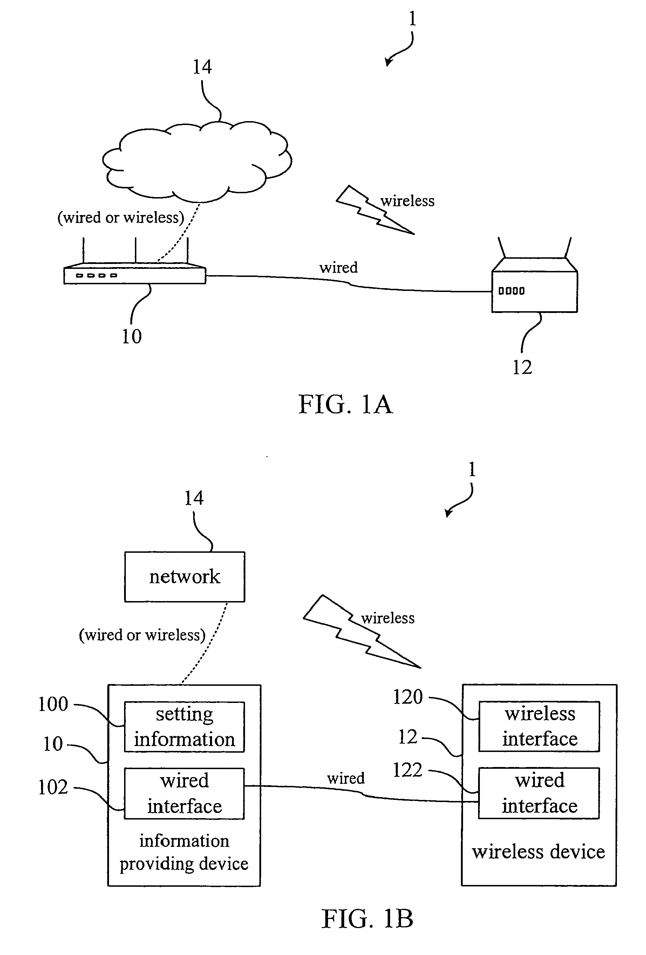

Please refer to FIG. 1A and FIG. 1B. FIG. 1A is a schematic diagram illustrating a wireless communication system 1 according to an embodiment of the invention. FIG. 1B is a functional block diagram illustrating the wireless communication system 1 in FIG. 1A. The wireless communication system 1 includes an information providing device 10, a wireless device 12 of the invention and network 14.

The information providing device 10 stores setting information 100 relative to the network 14. For example, in the embodiment, the information providing device 10 can provide data (setting information 100) in three categories including wireless connection, network condition and valid resource. The category of wireless connection is about information of Service Set Identifier, network authentication, data encryption, etc. The category of network condition is about information of IP address, netmask, Domain Name System, gateway, etc. The category of valid resource is about services supported by the network 14, e.g., storing space, audio equipment, printer, etc.

The information providing device 10 can form a communication with the network 14 via either wired or wireless transmission. The information providing device can be a wireless router, a computer, or a device capable of providing its own information. The information providing device 10 includes a wired interface 102. The information providing device 10 executes application programs which correspond to the wired interface 102. We have to make clear that there are other necessary hardware and software components disposed in the information providing device 10, e.g., processing unit, memory, application programs, etc. The usage and theory of those components are well known by people who are skilled in the art.

The wireless device 12 in the embodiment includes a wireless interface 120 and wired interface 122. The wireless device 12 can be a wireless camera, wireless printer, wireless speaker, etc. There are also necessary hardware and software components disposed in the information providing device 12, e.g., processing unit, memory, application programs, etc. In the embodiment, the wired interface 102 of the information providing device 10 and the wired interface 122 of the wireless device 12 are both USB interfaces. When the wired interface 122 of the wireless device 12 is coupled to the wired interface 102 of the information providing device 10, the information providing device 10 identifies the wireless device 12 as a storing medium using a universal driver.

Afterward, the information providing device 10 executes a program for judging whether the wireless device 12 needs a wireless configuration or not. When a judgment made by the program is positive, the information providing device 10 automatically provides the setting information 100 to the wireless device 12 through the wired interface 102 and the wired interface 122. After fetching the setting information 100, the wireless device 12 adopts the setting information 100, and connects to the network 14 through the wireless interface 120. When the judgment made by the program is negative, it means that the relative setting of the wireless device 12 has been configured and needs no reconfiguration. Therefore, the wireless device 12 may directly form a wireless connection to the network 14 with the previous setting. Said program in the information providing device 10 can be executed before the coupling of the wireless device 12 to the information providing device 10, or alternatively, the program can be executed automatically after the coupling.

In addition, the wireless device 12 can acquire service information supported by the network 14. For instance, the service information can be valid resource of the setting information 100. When the wireless connection is established, the wireless device 12 can access to the network 14, and further to utilize useful resources supported by the network 14. After the establishment of the wireless connection, users can separate the wired interface 122 of the wireless device 12 from the wired interface 102 of the information providing device 10. In the future connecting configuration, the coupling procedure of the two interfaces can be skipped.

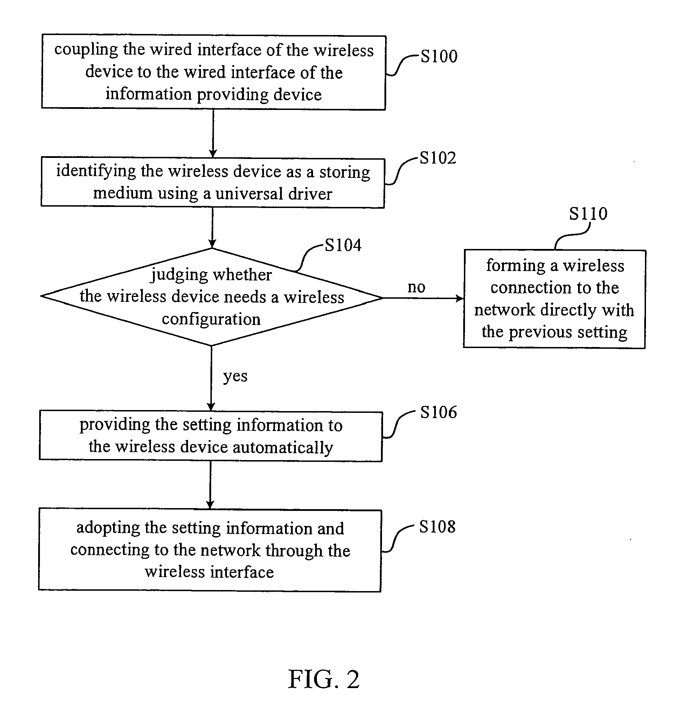

Please refer to FIG. 2. FIG. 2 is a flowchart illustrating a method to automatically establish a wireless connection according to an embodiment of the invention. Please refer to the wireless communication system 1 in FIG. 1A and FIG. 1B at the same time. First of all, step S100 is performed to couple the wired interface 122 of the wireless device 12 to the wired interface 102 of the information providing device 10. Afterward, step S102 is performed to identify the wireless device 12 as a storing medium using a universal driver. Afterward, step S 104 is performed to judge whether the wireless device 12 needs a wireless configuration or not.

If the result of the judgment is positive, step S106 is performed to provide the setting information 100 to the wireless device 12 automatically through the wired interface 102 and the wired interface 122. After obtaining the setting information 100, step S108 is preformed to adopt the setting information 100 and connected to the network 14 through wireless interface 120. On the other hand, if the result of the judgment of step S 104 is negative, it means that the relative setting of the wireless device 12 has been configured and needs no reconfiguration. Therefore, step S110 is performed to form a wireless connection to the network 14 directly with the previous setting.

In another embodiment, the wired interface 102 of the information providing device 10 and the wired interface 122 of the wireless device 12 are both Ethernet interfaces. When users couple the wired interface 122 of the wireless device 12 to the wired interface 102 of the information providing device 10, the wireless device 12 executes a program for judging whether the wireless device 12 needs a wireless configuration or not. When the result of the judgment is positive, the wireless device 12 actively gathers the setting information 100 about the network 14 from the information providing device 10. The wireless device 12 may acquire the relative setting information in several ways. For example, it may utilize a program to sniff the packet over the network, or it may actively send a request for the information.

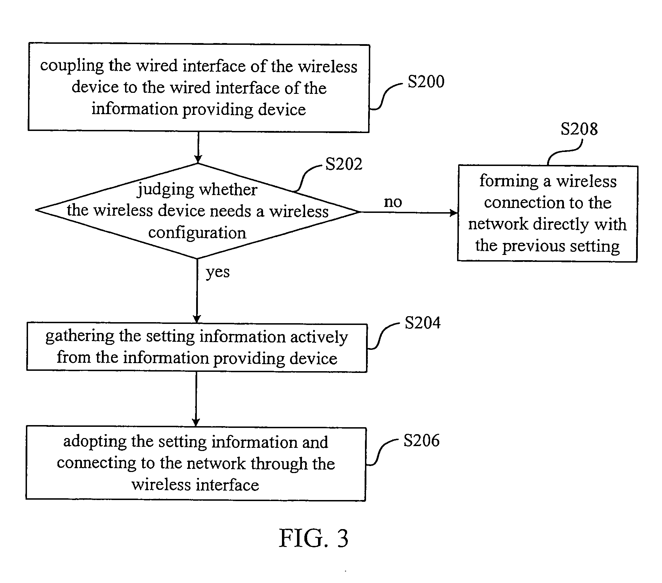

Please refer to FIG. 3. FIG. 3 is a flowchart illustrating a method of automatically establishing a wireless connection according to another embodiment of the invention. In this embodiment, the wired interface 102 and the wired interface 122 are both Ethernet interfaces. First of all, step S200 is performed to couple the wired interface 122 of the wireless device 12 to the wired interface 102 of the information providing device 10. Afterward, step S202 is performed to judge whether the wireless device 12 needs a wireless configuration or not. If the result of the judgment is positive, step S204 is performed to gather the setting information 100 actively from the information providing device 10. After fetching the setting information 100, step S206 is preformed to adopt the setting information 100 and connected to the network 14 through the wireless interface 120. On the other hand, if the result of the judgment of step S202 is negative, it means that the relative setting of the wireless device 12 has been configured and needs no reconfiguration. Therefore, step S208 is performed to form a wireless connection to the network 14 directly with the previous setting.

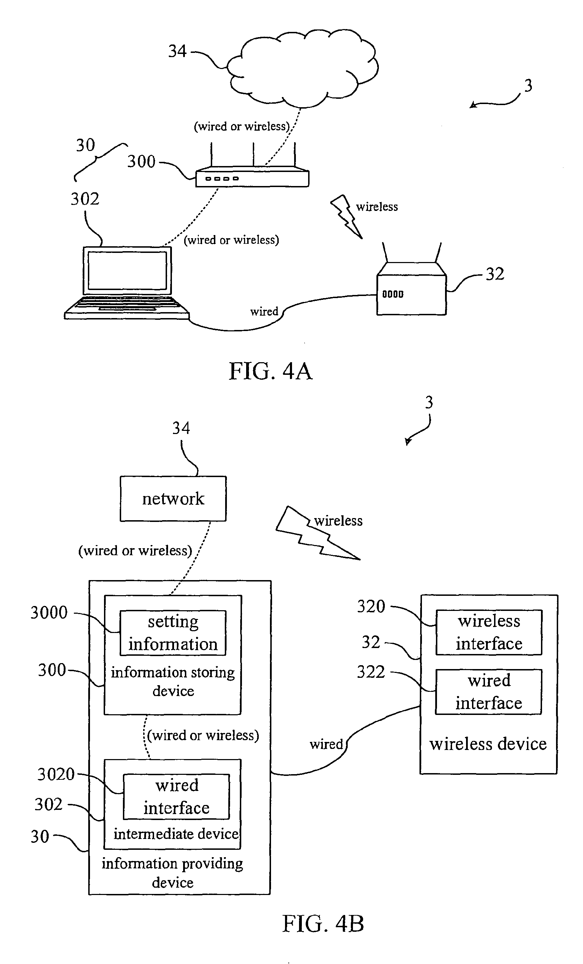

Please refer to FIG. 4A and FIG. 4B. FIG. 4A is a schematic diagram illustrating a wireless communication system 3 according to another embodiment of the invention. FIG. 4B is a functional block diagram illustrating the wireless communication system 3 in FIG. 4A.

The major difference between the wireless communication system 3 and the wireless communication system 1 is that the information providing device 30 further includes an information storing device 300 and an intermediate device 302. The information storing device 300 stores setting information 3000 relative to the network 34. The intermediate device 302 is coupled to the information storing device 300 in a wired or wireless way. The intermediate device 302 is used for assisting the wireless device 32 in fetching the setting information 3000 stored in the information storing device 300. The intermediate device 302 includes a wired interface 3020. The intermediate device 302 can be a computer or other devices alike. In this embodiment, the wired interface 3020 of the intermediate device 302 and the wired interface 322 of the wireless device 32 are both USB interfaces. Therefore, when the wired interface 322 of the wireless device 32 is coupled to the wired interface 3020 of the intermediate device 302, the intermediate device 302 identifies the wireless device 32 as a storing medium using a universal driver.

Afterward, the intermediate device 302 executes a program for judging whether the wireless device 32 needs a wireless configuration or not. When the result of a judgment made by the program is positive, the intermediate device 302 automatically provides the setting information 3000, which is stored in the information storing device 300, to the wireless device 32. After fetching the setting information 3000, the wireless device 32 adopts the setting information 3000, and connects to the network 34 through the wireless interface 320. When the result of the judgment made by the program is negative, it means that the relative setting of the wireless device 32 has been configured and needs no reconfiguration. Therefore, the wireless device 32 may directly forms a wireless connection to the network 34 with the previous setting.

With helps of the intermediate device 302 and the information storing device 300, the wireless device 32 may access to useful resource on the network 34. The basic theory of the wireless communication system 3 is similar to one of said wireless communication system 1.

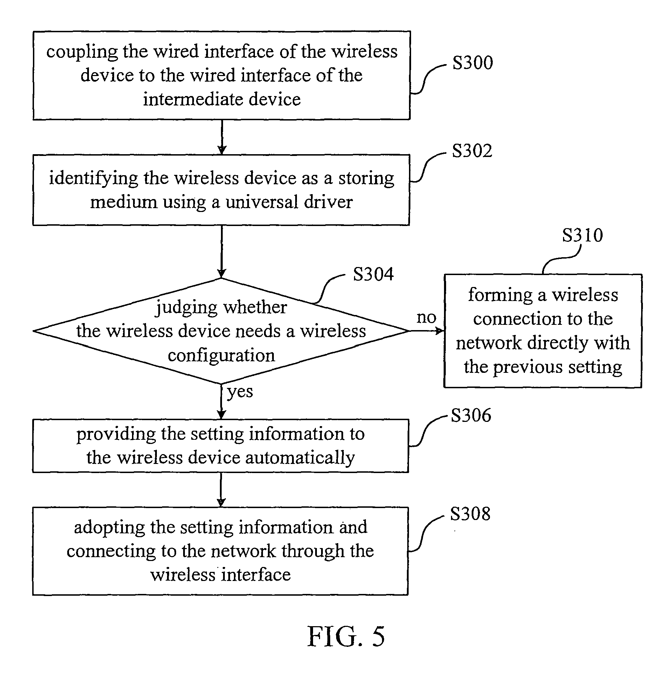

Please refer to FIG.5. FIG.5 is a flowchart illustrating a method of automatically establishing a wireless connection according to another embodiment of the invention. Additionally, please refer to the wireless communication system 3 in FIG. 4A and FIG. 4B at the same time. First of all, step S300 is performed to couple the wired interface 322 of the wireless device 32 to the wired interface 3020 of the intermediate device 302. Afterward, step S302 is performed to identify the wireless device 32 as a storing medium using a universal driver. Afterward, step S104 is performed to judge whether the wireless device 32 needs a wireless configuration or not. If the result of the judgment is positive, step S306 is performed to provide the setting information 3000 to the wireless device 32 automatically through the wired interface 3020 and the wired interface 322. After obtaining the setting information 3000, step S308 is preformed to adopt the setting information 3000 and connect to the network 34 through the wireless interface 320. On the other hand, if the result of the judgment of step S304 is negative, it means that the relative setting of the wireless device 32 has been configured and needs no reconfiguration. Therefore, step S310 is performed to form a wireless connection directly between the wireless device 32 and the network 34 with the previous setting.

Compared to prior art, the wireless device according to a preferable embodiment of the invention includes not only a wireless interface, but also an additional wired interface (e.g. USB or Ethernet) which can be coupled to an information providing device (e.g. computer or wireless router) or an intermediate device (e.g. computer). In this way, the wireless may obtain information about wireless connection, network resource, network service, etc. Besides, the information providing device or the intermediate device includes a wired interface corresponding to the wireless device, and it executes a program which supports the wired interface. When a connection with the wireless device without setting information is formed, the information providing device or the intermediate device with the program can actively provide or passively respond the information, which is about wireless connection, network resource and network service, to the wireless device. In this way, the detailed configuration of the wireless network is not a must-know by a common user anymore.

According to the invention, the only thing that users must do is coupling the wired interface of the wireless device to the corresponding wired interface of the information providing device or the intermediate device. There are corresponding programs on each device for completing the following configuration automatically.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

The invention discloses a wireless device and a method for automatically establishing a wireless connection. The wireless device is selectively connected to the information providing device. The information providing device stores setting information relative to a wireless network. The wireless device comprises a wireless interface and a first wired interface. The information providing device comprises a second wired interface. When the first wired interface of the wireless device is coupled to the second wired interface of the information providing device, alternatively, the information providing device automatically provides the setting information to the wireless device, or the wireless device actively gathers the setting information from the information providing device. After fetching the setting information, the wireless device utilizes the setting information to connect the wireless network via the wireless interface.

## Claims

1. A wireless device selectively connected to an information providing device, the information providing device storing setting information relative to a wireless network, the wireless device comprising:
a wireless interface; and
a first wired interface selectively coupled to a second wired interface of the information providing device;
when the first wired interface of the wireless device is coupled to the second wired interface of the information providing device, the information providing device automatically provides the setting information through the first wired interface and the second wired interface to the wireless device, or alternatively, the wireless device actively gathers the setting information from the information providing device through the first wired interface and the second wired interface.

2. The wireless device of claim 1, wherein the first wired interface and the second wired interface are both universal serial bus (USB) interfaces.

3. The wireless device of claim 2, wherein when the first wired interface of the wireless device is coupled to the second wired interface of the information providing device, the information providing device identifies the wireless device as a storing medium using a universal driver.

4. The wireless device of claim 2, wherein the information providing device executes a program for judging whether the wireless device needs a wireless configuration, and the information providing device provides the setting information to the wireless device automatically when a judgment made by the program is positive.

5. The wireless device of claim 1, wherein the first wired interface and the second wired interface are both Ethernet interfaces.

6. The wireless device of claim 5, wherein the wireless device executes a program for judging whether the wireless device needs a wireless configuration, and the wireless device actively gathers the setting information from the information providing device when a judgment made by the program is positive.

7. The wireless device of claim 1, wherein after fetching the setting information, the wireless device adopts the setting information, and connects to the wireless network through the wireless interface.

8. The wireless device of claim 1, wherein the information providing device comprises:
an information storing device for storing the setting information; and
an intermediate device coupled to the information storing device in a wired or wireless way, the intermediate device comprising the second wired interface;
wherein when the first wired interface of the wireless device is coupled to the second wired interface of the intermediate device, the intermediate device automatically provides the setting information stored in the information storing device to the wireless device.

9. The wireless device of claim 8, wherein when the first wired interface of the wireless device is coupled to the second wired interface of the intermediate device, the intermediate device identifies the wireless device as a storing medium using a universal driver.

10. The wireless device of claim 8, wherein the intermediate device executes a program for judging whether the wireless device needs a wireless configuration, and the intermediate device provides the setting information to the wireless device automatically when a judgment made by the program is positive.

11. A method of automatically establishing a wireless connection suitable for a wireless device and an information providing device, the information providing device storing setting information relative to a wireless network, the method comprising steps of:
coupling a first wired interface of the wireless device to a second wired interface of the information providing device;
fetching the setting information through the first wired interface and the second wired interface; and
utilizing the setting information to connect the wireless device and the wireless network.

12. The method of claim 11, wherein the first wired interface and the second wired interface are both universal serial bus (USB) interfaces.

13. The method of claim 12, further comprising the step of:
identifying the wireless device as a storing medium using a universal driver.

14. The method of claim 12, further comprising the steps of:
executing a program for judging whether the wireless device needs a wireless configuration; and
providing the setting information to the wireless device automatically if a judgment made by the program is positive.

15. The method of claim 11, wherein the first wired interface and the second wired interface are both Ethernet interfaces.

16. The method of claim 15, further comprising the steps of:
executing a program for judging whether the wireless device needs a wireless configuration; and
gathering the setting information from the information providing device actively if a judgment made by the program is positive.
